# EUROPEAN PATENT APPLICATION

(11) **EP 4 776 129 A1**
(43) Date of publication of application: **15.07.2026**
(21) Application number: 24871072.5
(22) Date of filing: 29.09.2024
(51) Int. Cl.: G06F 9/48

(54) **DATA PROCESSING METHOD AND DEVICE**

(30) Priority: 29.09.2023 CN 202311291628
(71) Applicant: HUAWEI TECHNOLOGIES CO., LTD., Shenzhen 518129 (CN)
(72) Inventor: WANG, Ruonan, Shenzhen, Guangdong 518129 (CN); GAO, Shuai, Shenzhen, Guangdong 518129 (CN); LIU, Yong, Shenzhen, Guangdong 518129 (CN)
(74) Representative: Pfenning, Meinig & Partner mbB
(86) International application number: PCT/CN2024/122255
(87) International publication number: WO 2025/067537

(57) **Abstract**

A data processing method and apparatus are provided. The method is applied to a computing cluster. The computing cluster includes a plurality of computing nodes. The computing cluster is connected to a storage cluster. The storage cluster is configured to store data generated by the computing cluster. A plurality of processes of an application run on the plurality of computing nodes. Each process executes a part of data of the application. The method includes: obtaining N pieces of first to-be-written data of the plurality of processes; adjusting the N pieces of first to-be-written data to M pieces of second to-be-written data based on a first granularity of accessing data of the storage cluster, where a size of each piece of second to-be-written data is the first granularity, and the first granularity is determined based on an attribute of the storage cluster; and writing the M pieces of second to-be-written data into the storage cluster.

## Description

### CROSS-REFERENCE TO RELATED APPLICATIONS

This application claims priority to Chinese Patent Application No. 202311291628.7, filed with the China National Intellectual Property Administration on September 29, 2023 and entitled "DATA PROCESSING METHOD AND APPARATUS", which is incorporated herein by reference in its entirety.

### TECHNICAL FIELD

This application relates to the field of high-performance computing technologies, and in particular, to a data processing method and apparatus.

### BACKGROUND

In large-scale computing systems such as high-performance computing (high-performance computing, HPC) and supercomputing (supercomputing, SC), data read and write performance has a critical impact on performance of applications running on a large-scale supercomputer cluster. Data read and write often become performance bottlenecks of a large-scale computing instance. Currently, a solution for optimizing data read and write performance of applications is urgently needed.

### SUMMARY

Embodiments of this application provide a data processing method and apparatus, to provide an IO optimization manner that automatically adapts to a storage cluster, so as to improve IO performance of an application.

According to a first aspect, this application provides a data processing method. The method may be applied to a computing cluster. The computing cluster includes a plurality of computing nodes. The computing cluster is connected to a storage cluster. The storage cluster is configured to store data generated by the computing cluster. A plurality of processes of an application run on the plurality of computing nodes. Each process executes a part of data of the application. The method includes: obtaining N pieces of first to-be-written data of the plurality of processes of the application; determining a first granularity of accessing data of the storage cluster based on an attribute of the storage cluster; adjusting the N pieces of first to-be-written data into M pieces of second to-be-written data based on the first granularity, where a size of each piece of second to-be-written data is the first granularity; and writing the M pieces of second to-be-written data into the storage cluster.

According to the foregoing method, the N pieces of first to-be-written data generated by the plurality of processes of the application are obtained, the first granularity of accessing data of the storage cluster is determined based on the attribute of the storage cluster, data reorganization is performed on the N pieces of first to-be-written data based on the first granularity, and M pieces of second to-be-written data obtained through the reorganization are written into the storage cluster. In this manner, an IO operation of the application can be automatically optimized based on the attribute of the storage cluster without modifying program code of the application to adapt to the storage cluster. Application logic is completely decoupled from an underlying IO operation. In this way, an adjusted IO operation can be controlled within an optimal performance range for a back-end storage cluster, and actual write IO performance of the application is greatly improved.

In a possible design, adjusting the N pieces of first to-be-written data to the M pieces of second to-be-written data based on the first granularity of accessing data of the storage cluster includes: splitting, at the first granularity, first to-be-written data that is in the N pieces of first to-be-written data and that is greater than the first granularity; and/or concatenating, at the first granularity, first to-be-written data that is in the N pieces of first to-be-written data and that is less than the first granularity.

According to the foregoing method, a plurality of IO operation optimization manners and flexibility are provided.

In a possible design, the method further includes: when M is greater than a preset value, adjusting a value of the first granularity until M is less than or equal to the preset value.

According to the foregoing method, flexibility of IO optimization is provided.

In a possible design, the method further includes: determining a plurality of pieces of first to-be-read data of the plurality of processes; and obtaining at least one piece of second to-be-read data from the storage cluster based on a second granularity of accessing data of the storage cluster, where the at least one piece of second to-be-read data includes the plurality of pieces of first to-be-read data, a size of each piece of second to-be-read data is the second granularity, and the second granularity is determined based on the attribute of the storage cluster.

In a possible design, the second granularity of accessing the storage cluster is determined based on the attribute of the storage cluster, and data is read from the storage cluster based on the second granularity. In this manner, an IO operation of the application may be automatically optimized based on the attribute of the storage cluster without modifying program code of the application to adapt to the storage cluster. Application logic is completely decoupled from an underlying IO operation. In this way, an adjusted IO operation can be controlled within an optimal performance range for the back-end storage cluster, and actual read IO performance of the application is greatly improved.

According to a second aspect, this application further provides a data processing apparatus. The apparatus has a function of implementing a behavior in the method described in the first aspect. For beneficial effects, refer to the descriptions of the first aspect. Details are not described herein again. The function may be implemented by hardware, or may be implemented by executing corresponding software by hardware. The hardware or software includes one or more modules corresponding to the foregoing functions. In a possible design, a structure of the apparatus includes an obtaining module, a processing module, and an execution module. Optionally, the apparatus may further include an adjustment module and a determining module. These modules may implement functions of behaviors in the method in the first aspect. For details, refer to detailed descriptions in the method example. Details are not described herein again.

According to a third aspect, this application further provides a computing device. A structure of the computing device includes a processor and a memory. The memory is configured to store instructions and/or data. The memory is coupled to the processor. When executing program instructions stored in the memory, the processor may implement a function of a behavior in the method described in the first aspect. The structure of the computing device further includes a communication interface, configured to communicate with another device, for example, obtain data corresponding to a task from a first-layer storage resource.

According to a fourth aspect, this application further provides a data processing system. The system includes at least one computing device. The at least one computing device has a function of implementing a behavior in the first aspect. For beneficial effects, refer to the descriptions of the first aspect. Details are not described herein again. A structure of each computing device includes a processor and a memory. The processor is configured to support the computing device in performing some or all functions of a behavior in any one of the first aspect and the possible implementations of the first aspect. The memory is coupled to the processor, and stores program instructions and data that are necessary for the computing device. A communication interface is further included in the structure of the computing device, and is configured to communicate with another device.

According to a fifth aspect, this application further provides a computer-readable storage medium. The computer-readable storage medium stores instructions. When the instructions are run on a computer, the computer is caused to perform the method according to any one of the first aspect and the possible designs of the first aspect.

According to a sixth aspect, this application further provides a computer program product including instructions. When the computer program product runs on a computer, the computer is caused to perform the method according to any one of the first aspect and the possible designs of the first aspect.

According to a seventh aspect, this application further provides a computing chip. The chip is connected to a memory, and the chip is configured to read and execute a software program stored in the memory, to perform the method according to any one of the first aspect and the possible implementations of the first aspect.

For descriptions of beneficial effects of any one of the second aspect to the seventh aspect, refer to the descriptions of technical effects in any possible implementations of the first aspect. Details are not described herein again in this application.

### BRIEF DESCRIPTION OF DRAWINGS

FIG. 1 is a diagram of a possible system architecture to which an embodiment of this application is applied;
FIG. 2 is a diagram of a plurality of tasks of a job according to an embodiment of this application;
FIG. 3 is a diagram of a first-type IO mode;
FIG. 4 is a diagram of a second-type IO mode;
FIG. 5 is a diagram of a third-type IO mode;
FIG. 6 is a diagram of a fourth-type IO mode;
FIG. 7 is a schematic flowchart corresponding to a data processing method according to an embodiment of this application;
FIG. 8 is a diagram of a procedure of a data processing method according to an embodiment of this application;
FIG. 9 is a diagram of a structure of an IO module according to an embodiment of this application;
FIG. 10 is a diagram of comparison before and after data reorganization according to an embodiment of this application;
FIG. 11 is a diagram of an IO operation manner before and after IO optimization according to an embodiment of this application;
FIG. 12 is a diagram of a structure of a storage processing apparatus according to an embodiment of this application; and
FIG. 13 is a diagram of a structure of a computing device according to an embodiment of this application.

### DESCRIPTION OF EMBODIMENTS

High-performance computing (high-performance computing, HPC) is a cross-industry and cross-application computing discipline. Usually, the most cutting-edge computer technologies are applied to the most complex and cutting-edge scientific computing and solution and are widely applied to computing of large-scale scientific problems and processing of a massive amount of data, such as meteorological forecast, earthquake prediction, automobile simulation, biopharmaceutical, gene sequencing, nuclear explosion simulation, rocket launch simulation, and chip design and manufacturing. A computer cluster (computer cluster) that can provide HPC services is referred to as an HPC cluster.

The computer cluster is a group of loosely or tightly connected computing nodes that work together, typically for performing a large job (job). A cluster is usually deployed to improve overall performance based on a concurrency degree, and is more cost-effective than a single computing node with a comparable speed or comparable availability. Computing nodes are connected to each other via a network, and each computing node runs an operating system instance of the computing node. In most cases, each computing node uses same hardware and a same operating system. In some cases, different operating systems may be used on different hardware.

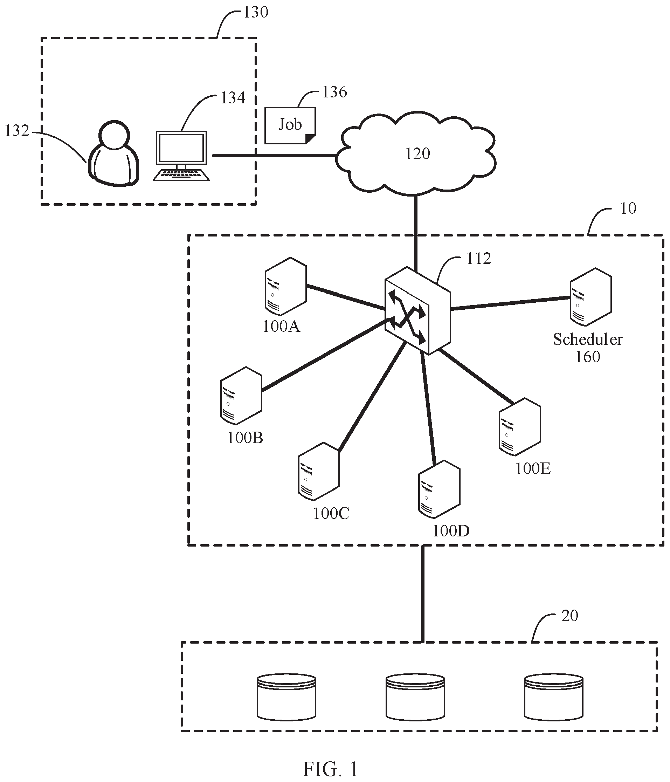

FIG. 1 is a diagram of a possible system architecture to which an embodiment of this application is applied. It should be understood that the system architecture is merely an example for description, and only components related to embodiments of the present invention are provided. In addition, a quantity of nodes shown in each component is merely an example, and FIG. 1 does not specifically limit application of the present invention.

As shown in FIG. 1, a computing cluster 10 includes a plurality of computing nodes, such as 100A, 100B, 100C, 100D, and 100E. These computing nodes are configured to provide computing resources. For one computing node, in terms of software, applications can be installed and run on an operating system. Applications are short for some application programs, including applications used to execute jobs, such as an HPC application, an artificial intelligence (artificial intelligence, AI) application, and a big data processing application. The HPC application specifically includes WRF (for weather prediction), OpenFOAM (used in the field of aerodynamics), and other applications. Different applications may be used to process different types of jobs. In terms of hardware, the computing node may include a plurality of processors or processor cores, each processor may include one or more processor cores, and each processor or processor score may be a computing resource. Therefore, one physical computing node may provide a plurality of computing resources. The computing nodes 100A, 100B, 100C, 100D, and 100E are interconnected via a network 112. In addition, a computing node 160 is also connected to the network 112 as a scheduler. In operation, the scheduler 160 may control execution of jobs submitted to the computing cluster 10.

The job may be submitted to the computing cluster 10 from any suitable source. In this embodiment of this application, a location for submitting the job is not limited, and a specific mechanism for submitting the job by a user is not limited. For example, in FIG. 1, a user 132 may submit a job 136 from an enterprise 130 to the computing cluster 10. Specifically, in this example, the user 132 operates a client computer 134 to submit the job 136 to the computing cluster 10. In this example, the enterprise 130 is connected to the computing cluster 10 via a network 120. The network 120 generally represents any telecommunications or computer network, including, for example, an enterprise intranet, a wide area network (wide area network, WAN), a local area network (local area network, LAN), a personal area network (personal area network, PAN), or the Internet. Therefore, the user 132 may submit the job 136 to the computing cluster 10 from a remote location.

In this application, when submitting the job 136, the user 132 may further operate the client computer 134 to submit additional information of the job 136, for example, data and configuration information of the job 136. The configuration information includes, for example, but is not limited to, a quantity of computing nodes configured to execute the job 136, a quantity of processor cores, a quantity of processes, and the like. Correspondingly, the scheduler 160 may be configured to provide a user interface for submitting a job, manage computing resources (for example, monitoring a busy state or an idle state of a computing resource), and control resource allocation and life cycle management for application running, for example, schedule the job 136 to a plurality of idle computing resources, control the computing resource to start an application to run the job 136, control the computing resource to stop the application to end the job 136, and so on.

The job 136 herein is usually a large-scale job that requires a large quantity of computing resources for parallel processing. Properties and a quantity of jobs are not limited in this embodiment. A job may include a plurality of computing tasks (briefly referred to as tasks (task)), and these tasks may be allocated to a plurality of computing resources for execution. Most tasks are executed concurrently or in parallel, and some tasks need to depend on data generated by other tasks.

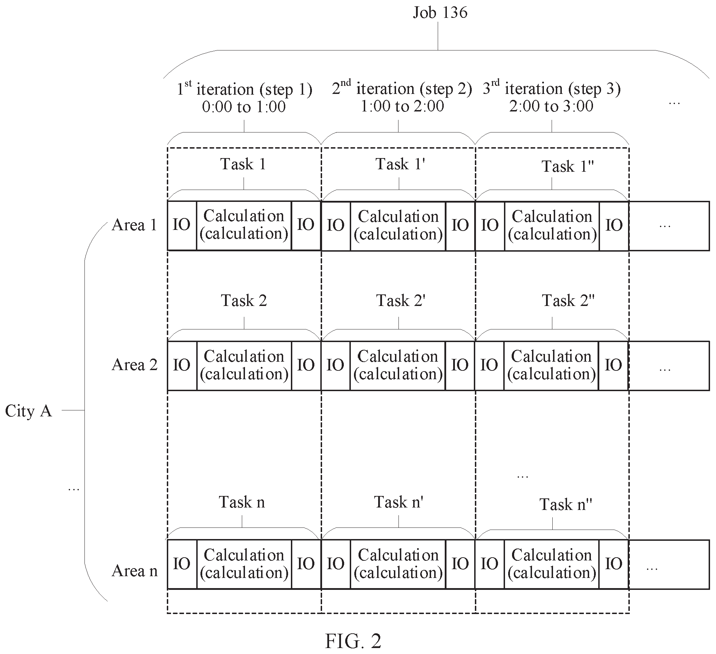

For example, refer to FIG. 2 for understanding. It is assumed that the job 136 is to predict a weather condition of a city A in future 24 hours, and the city A includes a plurality of areas, which are respectively denoted as an area 1, an area 2, ..., and an area n (where n is a positive integer). For example, the job 136 is divided into a plurality of tasks at a granularity of time and area. As shown in FIG. 2, at a granularity of one hour, predicting the weather condition of the city A in 24 hours is divided into 24 iterations (step), and each iteration is used for predicting weather conditions of different areas of the city A in a corresponding one hour. In this case, the job 136 is divided into parallel tasks to be executed in a plurality of iterations. For example, a 1^{st} iteration includes a task 1 to a task n that are to be executed in parallel. The task 1 is used for predicting a weather condition of the area 1 in the future 0:00 to 1:00, the task 2 is used for predicting a weather condition of the area 2 in the future 0:00 to 1:00, the task 3 is used for predicting a weather condition of the area 3 in the future 0:00 to 1:00, and so on. Similarly, a 2^{nd} iteration includes a task 1' to a task n' that are to be executed in parallel. The task 1' is used for predicting a weather condition of the area 1 in the future 1:00 to 2:00, the task 2' is used for predicting a weather condition of the area 2 in the future 1:00 to 2:00, the task 3' is used for predicting a weather condition of the area 3 in the future 1:00 to 2:00, and so on.

One iteration procedure is used as an example. A plurality of tasks in one iteration may be scheduled to idle computing resources in the computing cluster, and each computing resource may run one or more processes of an application. In FIG. 2, a plurality of tasks included in one iteration of the job 136 may be allocated to a plurality of parallel processes for execution. For example, a process 1 to a process n are respectively used for executing the task 1 to the task n, and each process is used for executing one task.

Procedures in which the processes execute the tasks may be the same. Simply, the procedure includes performing calculation based on input data of one task, to obtain an output result of the task. The task 1 is used as an example. An execution procedure of the task 1 specifically includes: The process 1 obtains input data of the task 1 from a storage cluster 20 through one or more read IOs, where the input data of the task 1 may include meteorological data of the area 1 in a period of time, for example, a temperature, a wind speed, a wind direction, air humidity, and a rainfall amount. Calculation is performed based on the input data (where for a weather prediction task, an equation may be constructed by using a mathematical method, and meteorological data of an area in a period of time is imported into the same equation for calculation and solution, to predict an atmospheric change and condition of the area in a future period of time), to obtain an output result of the task 1. For example, the output result includes meteorological data of the area 1 in the future 0:00 to 1:00. Then, the process 1 may write the output result of the task 1 into the storage cluster 20 through one or more write IOs.

There is a communication connection between the storage cluster 20 and the computing cluster 10. The storage cluster 20 may include a plurality of storage nodes. A storage device may be a storage server, a storage array, or the like, and is usually configured to store data persistently. Each storage node may include one or more hard disks. The hard disk may be a disk or a storage medium of another type, for example, a solid-state drive (Solid-State Disk, SSD), a hard disk drive (hard disk drive, HDD), a storage class memory (Storage Class Memory, SCM), a persistent memory (Persistent Memory, PM), a shingled magnetic recording hard disk, or a volatile memory. This is not specifically limited. All memories that can store data are applicable to embodiments.

In this embodiment, the storage cluster 20 may be configured to store the data of the job 136. The data of the job 136 includes initial data of the job 136 (for example, input data, configuration files, and the like of the plurality of tasks of the job 136). The initial data of the job 136 may be submitted by the user, or may be generated by an application based on a previous job. The data of the job 136 further includes an intermediate processing result (for example, an output result of the task) and other data that are generated in a procedure of executing the job 136 by a process. In an implementation, a file system is established in the storage cluster 20. In this case, in the storage cluster 20, the data of the job 136 is stored in a form of file. Correspondingly, when running the tasks of the job 136, a plurality of processes of the application read data of a file (for example, input data of the tasks) in the storage cluster 20 through one or more read IOs, and write to-be-written data (for example, output results of the tasks) into a corresponding file in the storage cluster 20 through one or more write IOs.

A manner in which the application controls the plurality of processes to read and write a file may be referred to as an IO mode. The IO mode may be distinguished by a quantity of processes that perform an IO operation and a quantity of files. Several IO modes are listed below.

### (1) Rank0 mode (N:1)

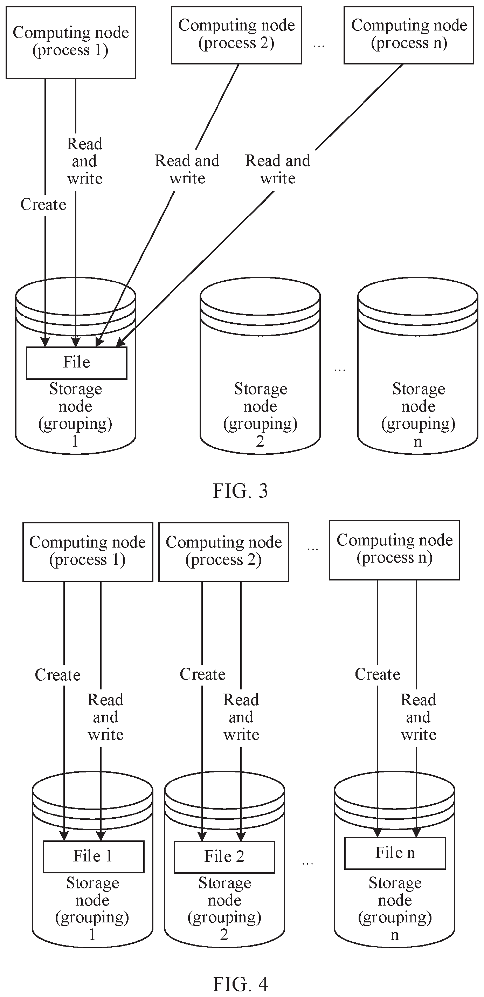

Refer to FIG. 3. An application includes N processes, and the N processes concurrently read and write one single file in the storage cluster 20. Specifically, for this mode, the application may perform an IO operation (including a data read operation and a data write operation) through an HDF5 interface, a PNetCDF interface, a multipoint interface (Multipoint Interface, MPI)-IO, or another IO interface. Such an IO interface usually creates one single file, so that a large quantity of application processes on a plurality of computing nodes read and write data in parallel. The N processes in FIG. 3 may be the plurality of processes used for executing the task 1 to the task n in FIG. 2. The single file may be used for storing data such as input data and output results of the task 1 to the task n. All the N processes read data from and write data into the single file.

For a mainstream parallel file system (such as Lustre and GPFS) of existing services, in this mode, there is a bottleneck as a total aggregated bandwidth of the parallel file system cannot be fully utilized when massive processes concurrently read and write a same single large file.

### (2) Independent IO mode (1:1)

Refer to FIG. 4. Each process of an application independently interacts with the storage cluster 20. Generally, each process accesses a file exclusive to the process, and processes do not exchange data with each other. Specifically, for this mode, the application may perform an IO operation through a portable operating system interface (portable operating system interface, POSIX) or an underlying system interface. Such an IO interface usually creates one or more files on each process. N processes in FIG. 4 are the plurality of processes used for executing the task 1 to the task n of the job 136. Each process corresponds to one file. Each file is used for storing data such as input data of a task executed by a corresponding process and an output result of the task. The N processes respectively read data from and write data into corresponding files.

A total quantity of files generated in this mode increases with a plurality of dimensions, such as a quantity of processes, a quantity of application operation iterations, and a quantity of data sets read and written by the application. When a large-scale parallel computing instance is running in a production environment, an excessively large quantity of generated files often leads to problems such as a parallel file system fault and a sharp drop in an actual IO bandwidth.

### (3) IO aggregation mode (1:N)

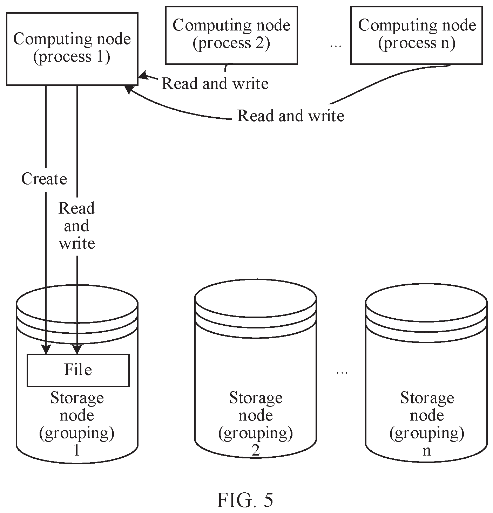

Refer to FIG. 5. A plurality of processes of an application send, to one of the processes (denoted as an aggregation process), a request indicating to-be-read/write data. The aggregation process performs data aggregation, for example, aggregates a plurality of small to-be-read data blocks into one large to-be-read data block, and aggregates a plurality of small to-be-written data blocks into one large to-be-written data block. Specifically, for the mode, the application may first perform data aggregation through an MPI communication interface, and then invoke a POSIX interface, an MPI-IO interface, an HDF5 interface, a PNetCDF interface, a NetCDF interface, or another IO interface to perform an IO operation. For example, the IO operation may include generating a read IO request or a write IO request. The read IO request is used for requesting to obtain a large to-be-read data block from the storage cluster 20, and the write IO request is used for requesting to write a large to-be-written data block into the storage cluster 20.

In this manner, that the application needs to perform data aggregation requires extra CPU and memory overheads, and logic of the data aggregation that has been fixed in logic code of the application cannot evolve with the evolution of a hardware architecture of the storage cluster. As a result, many applications can achieve optimal performance on a storage cluster used in an initial development phase. However, as a hardware architecture of the storage cluster evolves, read and write performance of the applications gradually deteriorates, and finally a bottleneck occurs.

### (4) IO aggregation mode (M:N)

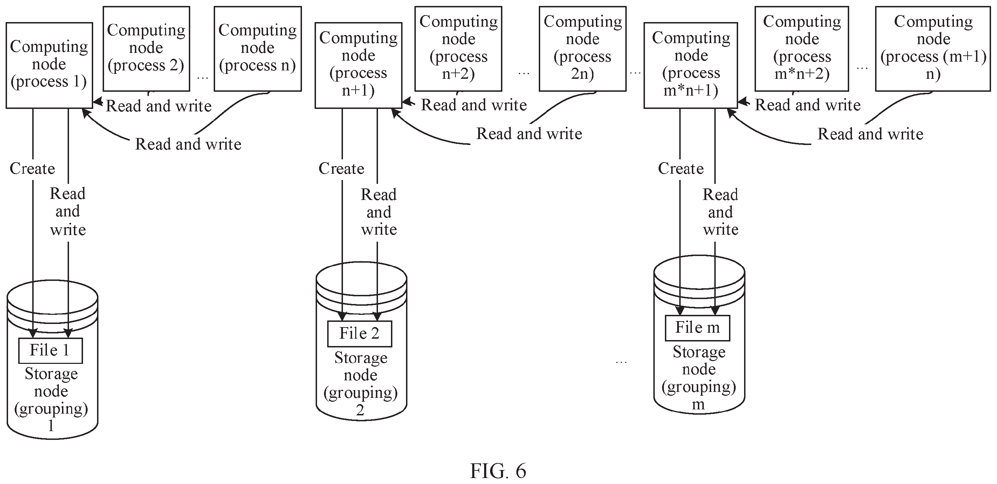

Refer to FIG. 6. In this mode, N processes included in an application are grouped into m aggregation groups, and each aggregation group includes one aggregation process. A function of the aggregation process is the same as that of the aggregation process in the IO aggregation mode (1:N). A difference lies in that there are more aggregation processes in the IO aggregation mode (M:N), and each aggregation process is responsible for aggregating only data in an aggregation group. Specifically, for this mode, the application invokes an ADIOS interface or another interface to perform an IO operation.

In this manner, the application needs to actively adapt to a hardware architecture of a storage system by modifying program code. For an application with complex IO logic, development costs are high, and as a result, most applications cannot use an optimization capability. In addition, in a running state, an IO mode, aggregation logic, and other parameters need to be manually configured for the application by using a configuration file, and the application cannot automatically adapt to a back-end storage cluster. It is difficult to achieve optimal performance in complex production environments.

Currently, applications usually use a fixed IO mode to read and write data while data read and write performance has a critical impact on performance of applications running on a large-scale supercomputer cluster. When an IO mode used by an application causes poor read and write performance, or an IO mode used by an application cannot adapt to the storage cluster due to update of the storage cluster, and the hardware architecture of the storage cluster evolves quickly and there are many architecture types, and workload of coding development for a large-scale parallel application is heavy, in practice, it is difficult to adapt, by modifying program code of IO operation logic of the application, to a storage cluster whose hardware architecture is evolved. As a result, it is difficult for the application to achieve optimal performance in complex production environments, and data read and write often become performance bottlenecks of running of a large-scale parallel computing instance.

In view of this, embodiments of this application provide a data processing method. In the method, an IO operation of an application is optimized based on an attribute of a storage cluster without modifying program code of the application, to automatically adapt to evolution of a hardware architecture of the storage cluster, so as to improve IO operation performance of the application. In this way, the application can automatically achieve high performance in a complex production environment, and running performance of a large-scale parallel computing instance is improved.

The following describes in detail the data processing method provided in embodiments of this application with reference to FIG. 1 and FIG. 2.

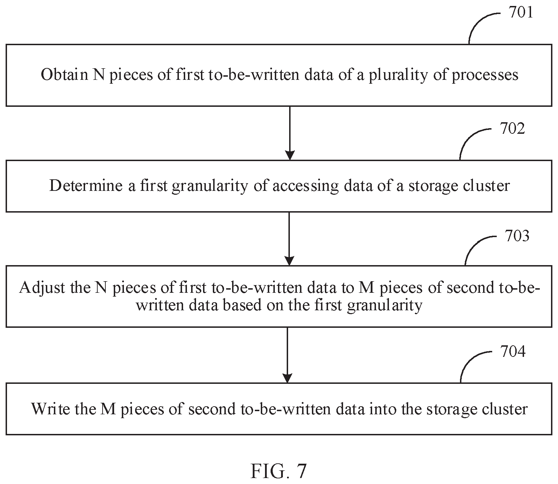

FIG. 7 is a schematic flowchart corresponding to a data processing method according to an embodiment of this application. The method may be applied to the computing cluster 10 shown in FIG. 1. The computing cluster 10 includes a plurality of computing nodes. Each computing node includes one or more computing resources. A plurality of processes included in an application for executing a job run on a plurality of computing resources. The computing cluster 10 is connected to a storage cluster 20. The storage cluster 20 is configured to store data of the job. The method may be performed by the plurality of computing nodes that are in the computing cluster 10 and that are configured to execute the job, or may be performed by components (for example, computing resources (for example, processors or processor cores) configured to execute a task) of the plurality of computing nodes. For ease of description, the following uses a job 136 as an example for description. The method may include the following steps.

Step 701: Obtain N pieces of to-be-written data (denoted as first to-be-written data) of a plurality of processes.

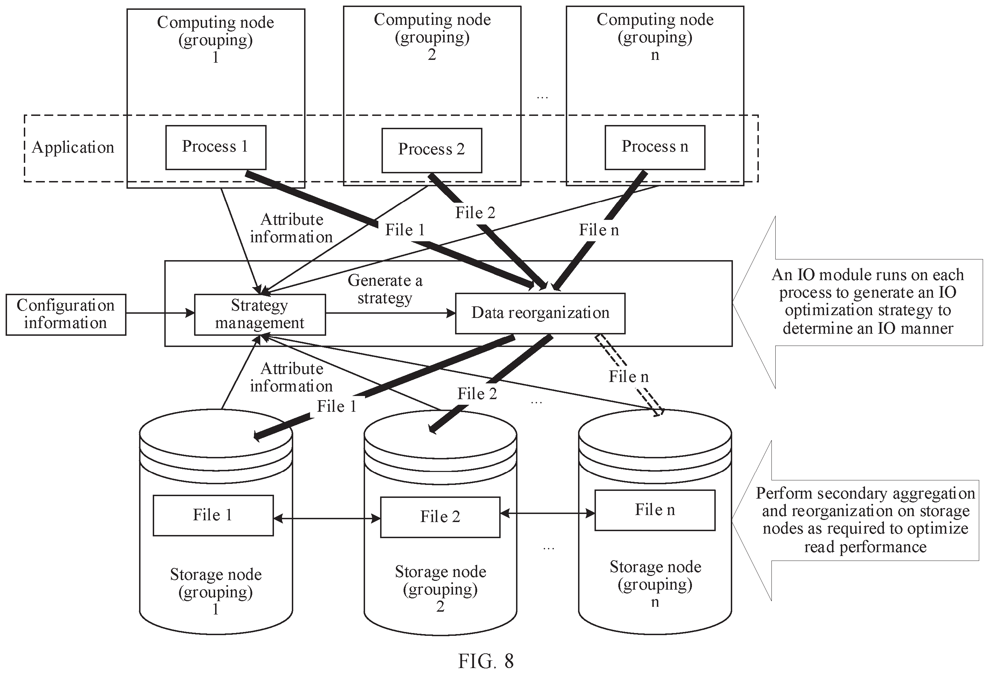

The job 136 is used as an example. Refer to FIG. 8 for understanding. It is assumed that an application for processing the job 136 runs on a plurality of computing nodes in FIG. 8. The application includes a plurality of processes. Each process is used for executing one or more tasks of the job 136. The plurality of processes may generate the first to-be-written data, for example, data such as output results of the tasks, when executing the tasks. In this example, step 701 may include obtaining N pieces of first to-be-written data of the plurality of processes included in the application for executing the job 136.

An embodiment of this application provides an IO module applicable to a large-scale parallel application. A function of the IO module includes: obtaining to-be-read/written data of a process of an application, and writing the to-be-written data into the storage cluster 20.

The following describes, in combination with the IO module provided in this embodiment of this application, how to obtain the first to-be-written data of the process.

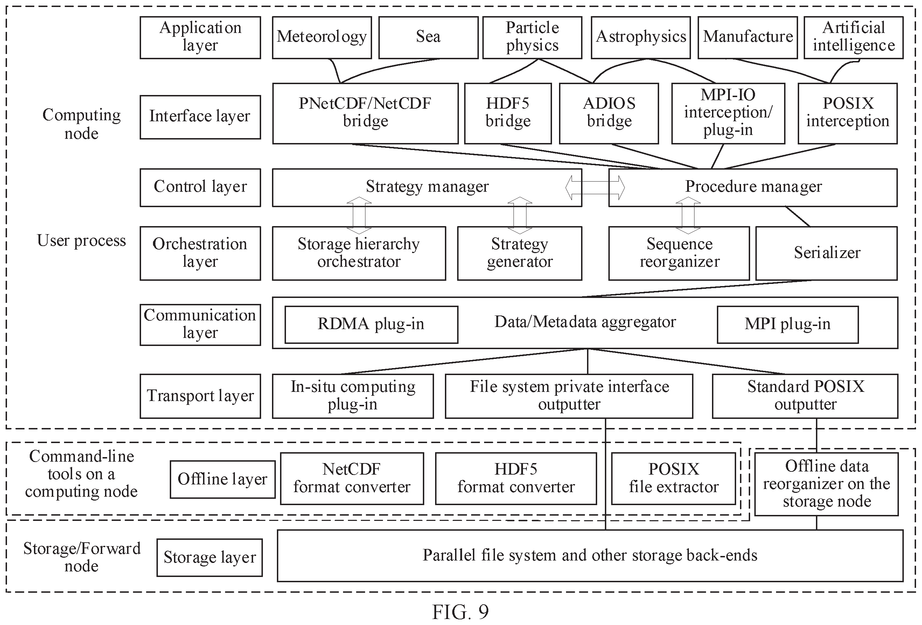

FIG. 9 is a diagram of a structure of an IO module according to an embodiment of this application. The IO module may be a software module running in a user process of a computing node, and the user process may be a process used for executing a task.

As shown in FIG. 9, the IO module may include but is not limited to some or all functional modules of an interface layer, a control layer, an orchestration layer, a communication layer, a transport layer, an offline layer, and the like. The interface layer includes bridges (also referred to as interceptors) or plug-ins of a plurality of types of IO interfaces, for example, a PNetCDF bridge, a NetCDF bridge, an HDF5 bridge, an ADIOS bridge, an MPI-IO interceptor, and a POSIX interceptor. Each type of IO interface bridge/interceptor corresponds to an original IO interface. For example, the PNetCDF bridge corresponds to a PNetCDF interface, the NetCDF bridge corresponds to a NetCDF interface, and the HDF5 bridge corresponds to an HDF5 interface. For example, an IO library corresponding to the IO interface bridge/interceptor and an IO library corresponding to the original IO interface may have a same function name and a same function list, but have different function functionalities. Each type of IO interface bridge may be configured to intercept invoking of the original IO interface by a process, to obtain to-be-written data generated by the process or determine to-be-read data of the process.

For example, an application writes data in a rank0 mode. In an implementation, a process 1 to a process n of the application may separately trigger invoking of the HDF5 interface. Invoking by each process includes first to-be-written data of the corresponding process, and each process may be used for requesting to write each piece of first to-be-written data into a single file, for example, a file 1 of the storage cluster 20. In this case, an IO module in each process intercepts, by using the HDF5 bridge, invoking of the HDF5 interface by the process, to obtain first to-be-written data of the process. In another implementation, the process of the application may alternatively trigger invoking of the NetCDF interface, to write first to-be-written data of the process into the file 1. The IO module in the process may intercept, by using the NetCDF bridge, invoking of the NetCDF interface by the process, to obtain the first to-be-written data of the process.

An IO module in each of the plurality of processes of the application may form a data IO processing system. Each IO module performs the foregoing interception operation to obtain the N pieces of first to-be-written data of the plurality of processes. The N pieces of first to-be-written data may be respectively generated by N parallel processes, and each process generates one piece of first to-be-written data. Alternatively, the N pieces of first to-be-written data may be generated by (N-L) processes in a period of time, and each process generates one or more pieces of first to-be-written data. The N pieces of first to-be-written data may be generated in a same iteration procedure, or may be generated in different iteration procedures. This is not specifically limited. For ease of description, the following uses an example in which the N pieces of first to-be-written data are generated by N processes in one iteration procedure of executing the job 136 for description.

Step 702: Determine a granularity (denoted as a first granularity) of accessing data of the storage cluster 20.

A write operation is used as an example. The first granularity may be a write granularity, and the write granularity refers to a size of a to-be-written data block in one write operation. For example, the write granularity being 4 KB indicates that one data block with a size of 4 KB is written each time, and the write granularity being 8 KB indicates that one data block with a size of 8 KB is written each time. Similarly, in a read operation, the first granularity may be a read granularity, and the read granularity refers to a size of a to-be-read data block in one read operation. For example, the read granularity being 4 KB indicates that one data block with a size of 4 KB is read each time, and the read granularity being 8 KB indicates that one data block with a size of 8 KB is read each time. The first granularity is a granularity corresponding to a target performance interval of the storage cluster 20. When the to-be-written data is written into the storage cluster 20 at the first granularity, the application may achieve high read and write performance.

The following describes how to determine the first granularity.

In an implementation, the first granularity is determined based on attribute information of the storage cluster 20. The attribute information indicates an attribute of the storage cluster 20. For example, the attribute information of the storage cluster 20 may include but is not limited to one or more of the following: network topology information of the storage cluster 20 and performance information of the storage cluster.

The network topology information of the storage cluster 20 indicates a quantity of storage nodes included in the storage cluster 20 and/or a connection relationship between storage nodes, a connection relationship between a storage node and a network device like a switch, and the like.

The performance information of the storage cluster 20 includes a correspondence between an access parameter and storage performance that are of the storage cluster 20. The access parameter may include but is not limited to a write granularity, a read granularity, a written file quantity, a read file quantity, and the like. In an example, the correspondence includes a correspondence between different write granularities and the storage performance of the storage cluster 20. For example, the correspondence includes storage performance corresponding to a write granularity of 4 KB, storage performance corresponding to a write granularity of 8 KB, storage performance corresponding to a write granularity of 16 KB, and the like. The first granularity may be a value in a write granularity range corresponding to a target performance interval in the correspondence, may be a random value or a preset value, or may be a value determined by using another method. In another example, there is a correspondence, including a correspondence between the written file quantity and storage performance. The written file quantity may be a quantity of files in one parallel write operation of a plurality of parallel processes. For example, a specific correspondence includes a correspondence between different written file quantities and the storage performance of the storage cluster 20. The storage performance of the storage cluster 20 may be determined by one or more performance indicators such as an effective bandwidth, a throughput, and input/output operations per second (input/output per second, IOPS) that are of the storage cluster 20. The foregoing correspondence may be determined based on an algorithm or determined by performing a plurality of tests on the storage cluster 20. This is not limited in this embodiment.

The following continues to describe, in combination with the IO module, a specific implementation of determining the first granularity.

Still refer to FIG. 9. Functional modules of the IO module further include a strategy generator, a storage hierarchy orchestrator, and a strategy generator. The storage hierarchy orchestrator may be configured to sense the attribute information of the storage cluster 20, the strategy generator may be configured to generate an IO optimization storage, a strategy manager may include a plurality of IO optimization manners, and the strategy manager may be configured to select one or more IO optimization manners from the plurality of IO optimization manners to generate one or more IO optimization strategies applicable to the storage cluster 20.

An example is given below.
1. An IO optimization manner is generating an IO optimization strategy by the strategy generator.

Specifically, the strategy generator may include one or more IO optimization algorithms. In an example, input data of the IO optimization algorithm includes the attribute information of the storage cluster 20 and/or a total data amount of the N pieces of first to-be-written data. An optimization objective of the IO optimization algorithm is to improve storage performance of storage performance 20. Correspondingly, an optimization objective parameter of the IO optimization algorithm may include but is not limited to one or more parameters such as an effective bandwidth, a throughput, and input/output operations per second (input/output per second, IOPS). Optionally, the IO optimization algorithm may further include a constraint condition, and the constraint condition may include a write granularity range and/or a written file quantity range that correspond/corresponds to the target performance interval of the storage cluster 20.

In an optional example, the attribute information of the storage cluster 20 and/or the total data amount of the N pieces of first to-be-written data are/is input into the IO optimization algorithm, to obtain a first IO optimization strategy generated by using the IO optimization algorithm. The first IO optimization strategy includes the first granularity of accessing data of the storage cluster 20 and/or the written file quantity. In an example, the written file quantity may be determined based on the first granularity, or the first granularity may be determined based on the written file quantity.

For example, the write operation is used as an example. It is assumed that a write granularity range corresponding to the target performance interval of the storage cluster 20 that is determined based on the attribute information of the storage cluster 20 is a KB to b KB, and a written file quantity range is c to d. In this case, a value of the first granularity is determined based on the total data amount of the N pieces of first to-be-written data and the IO optimization algorithm, so that the value of the first granularity is in a KB to b KB, and for M pieces of second to-be-written data obtained by dividing the N pieces of first to-be-written data at the first granularity, M is in c to d. If a value of M determined based on an initial value of the first granularity is not in c to d, the value of the first granularity is adjusted until M is in c to d.

In another implementation, the IO optimization strategy may be alternatively determined based on one or more pieces of information such as the attribute information of the storage cluster 20, attribute information of the computing cluster 10, and attribute information of an application for executing the job 136.

The attribute information of the computing cluster 10 includes but is not limited to one or more of the following: network topology information of a plurality of computing nodes configured to execute the job 136, a quantity of processes that are on each computing node and that are used for executing a task, and a quantity of computing resources (CPUs, memories, and the like) on the computing node. The network topology information indicates a quantity of the plurality of computing nodes, a connection relationship between computing nodes, a connection relationship between a computing node and a network device like a switch, grouping of the computing nodes, whether an aggregation process crosses computing nodes or crosses computing node groups, and the like.

In an optional example, the attribute information of the computing cluster 10 is input into an IO optimization algorithm, to obtain a second IO optimization strategy generated by using the IO optimization algorithm. The second IO optimization strategy includes aggregation information, and the aggregation information indicates an aggregation manner. For example, the aggregation information includes but is not limited to one or more pieces of information such as a quantity of aggregation groups, a quantity of processes included in each aggregation group, an identifier of an aggregation process, and an identifier of each process in the aggregation group (indicating a specific aggregation process to which data of which processes is aggregated). For example, if one piece of aggregation information includes that a quantity of processes included in each aggregation group is, for example, five, it indicates that the N processes are grouped in a unit of 5, and each aggregation group includes five processes. The five processes may be located on a same computing node, or computing nodes in which the five processes are located are connected to a same switch, so as to avoid transmitting to-be-aggregated data across nodes, groups, or multilayer networks, thereby improving data aggregation performance.

The attribute information of the application may include but is not limited to one or more of the following: a quantity of processes included in the application, an IO mode of each process, whether actions of parallel processes are the same, a total data amount of data generated in each iteration, a total data amount of data generated by one process in each iteration, whether data (a data format, a data size, and a normal form) between iterations changes, and the like.

In an optional example, the attribute information of the application is input into an IO optimization algorithm, to obtain a third IO optimization strategy generated by using the IO optimization algorithm. The third IO optimization strategy may indicate one or more of the following: specific data on which aggregation is to be performed, an optimized IO mode, and whether IO optimization strategies in iterations are the same. For example, if actions of processes in iterations are the same, IO optimization strategies in the iterations may be the same, and one or more IO optimization strategies determined in a 1^{st} iteration may be used for an IO optimization strategy in each subsequent iteration.

Certainly, the foregoing pieces of information may be combined and then input into the IO optimization algorithm. For example, input data of one IO optimization algorithm includes the attribute information of the storage cluster 20 and the attribute information of the computing cluster 10, and input data of another IO optimization algorithm includes the attribute information of the storage cluster 20, the attribute information of the computing cluster 10, and the attribute information of the application. In addition, input data of the IO optimization algorithm may further include other data. All IO optimization algorithms used for improving the storage performance of the storage cluster are applicable to this embodiment of this application.

2. Another IO optimization manner in the strategy manager is determining an IO optimization strategy based on configuration information submitted by a user. The configuration information may include one or more IO optimization strategies, to be specific, the IO optimization strategy may be specified by the user. In this manner, flexibility for the user to configure the IO optimization strategy is provided.

In conclusion, the strategy manager may generate one or more IO optimization strategies for the storage cluster 20. Refer to FIG. 8 for understanding. The strategy manager may send the one or more IO optimization strategies to a procedure manager, and the procedure manager performs data reorganization on the N pieces of first to-be-written data based on the one or more IO optimization strategies.

It should be noted that, (1) the IO optimization strategies listed above are merely examples for description. In practice, each IO optimization strategy may further include other information other than the foregoing examples, and an IO optimization strategy applicable to this embodiment is not limited to the foregoing several IO optimization strategies listed above. In addition, the foregoing IO optimization algorithm is also an example for description, and this is not limited in this embodiment. Any IO optimization manner that can improve performance of the storage cluster is applicable to this embodiment of this application. (2) There is no strict time sequence limitation between step 702 and step 701. Step 702 may be performed before step 701 or may be performed after step 701, or step 702 and step 701 may be performed simultaneously. To be specific, the first granularity may be determined before the N pieces of first to-be-written data are obtained or may be determined after the N pieces of first to-be-written data are obtained, or the first granularity and the N pieces of first to-be-written data may be determined simultaneously. (3) The attribute information of the storage cluster, an attribute of the computing cluster, and the attribute information of the application that are described above are merely examples. In an optional manner, the attribute information of the storage cluster 20 may further directly include the value of the first granularity. In this case, the first granularity does not need to be determined based on the IO optimization algorithm.

Step 703: Adjust the N pieces of first to-be-written data to the M pieces of second to-be-written data based on the first granularity.

An example in which the first granularity is a write granularity is used. The N pieces of first to-be-written data are adjusted to the M pieces of second to-be-written data based on the first granularity. A size of each piece of second to-be-written data is the first granularity. Step 703 includes: splitting, at the first granularity, first to-be-written data that is in the N pieces of first to-be-written data and that is greater than the first granularity; and/or concatenating, at the first granularity, a plurality of pieces of first to-be-written data that are in the N pieces of first to-be-written data and that are less than the first granularity. For example, the first granularity is 8 KB. Assuming that a size of each piece of first to-be-written data is 4 KB, every two pieces of first to-be-written data in the N pieces of first to-be-written data are concatenated into one piece of 8 KB second to-be-written data. For another example, if a size of a specific piece of first to-be-written data is 16 KB, the first to-be-written data is split into two pieces of 8 KB second to-be-written data.

The foregoing operations may be performed by the IO module. The function of the IO module provided in this embodiment further includes optimizing an IO mode of an application without modifying program code of the application. For example, the application uses a first IO mode to read/write data, and after obtaining to-be-read/written data of the application, the IO module may use a second IO mode to perform data reading/writing on the to-be-read/written data. The first IO mode may be different from the second IO mode. Certainly, when the first IO mode has high storage performance, that is, the first IO mode does not need to be optimized, the second IO mode may alternatively be the same as the first IO mode.

For example, a difference between the second IO mode and the first IO mode (which is alternatively understood as a difference before and after IO optimization) may include one or more of the following: different write IO quantities, different write granularities, different written file quantities, different formats of written files, and the like. As shown in FIG. 8, in the first IO mode, each process writes one file, and N processes write N files. In the second IO mode, N pieces of to-be-written data of the N processes are reorganized into M pieces of to-be-written data, and the M pieces of to-be-written data are written into M files in parallel. If M is less than N, the N files do not need to be written (which is shown by a dashed line in FIG. 8). To be specific, IO invoking of the application is originally for writing N files into the storage cluster 20, and after data reorganization, a quantity of files written by the IO module into the storage cluster 20 may decrease.

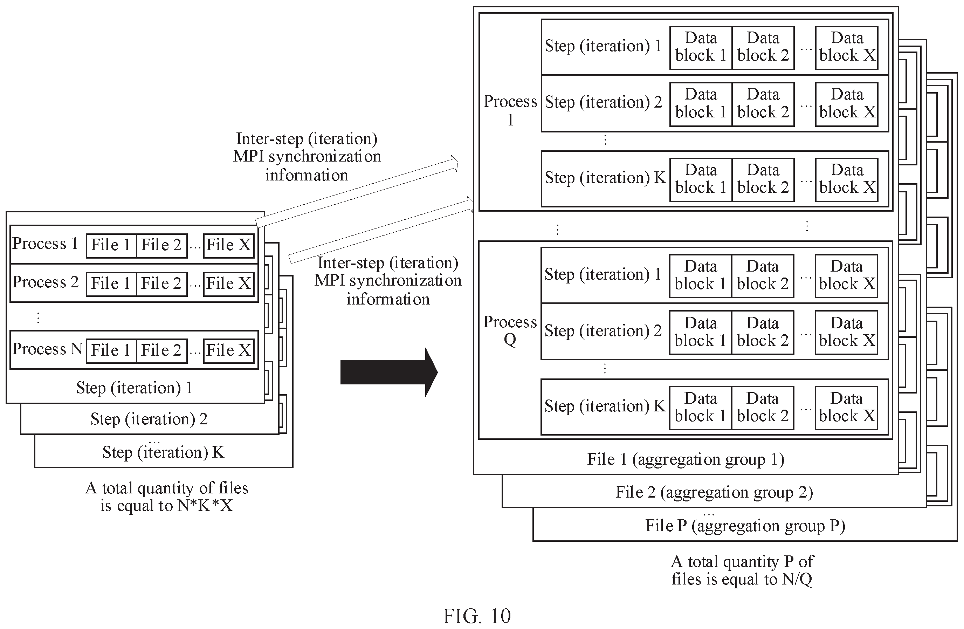

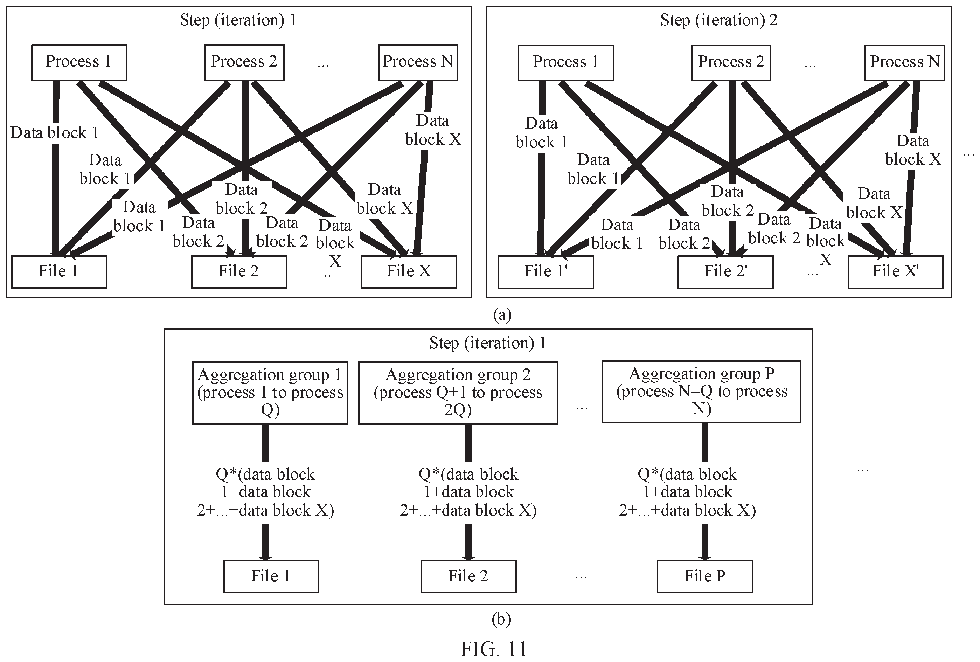

For example, FIG. 10 shows a mapping relationship from a POSIX file to a data format of the IO module. As shown in FIG. 10, it is assumed that a total quantity of processes included in the application is N, a quantity of iterations run by the application is K, and a quantity of files written by each process in each iteration is X. Refer to (a) in FIG. 11 for understanding. It is assumed that an IO mode used by the application is rank0. (a) in FIG. 11 shows an example of a data read/write operation in an iteration procedure of the application. A 1^{st} iteration is used as an example. As shown in FIG. 11, the N processes of the application separately write a data block 1 in the 1^{st} iteration into a file 1, write a data block 2 in the 1^{st} iteration into a file 2, ..., and write a data block X in the 1^{st} iteration into a file X. That is, a quantity of files written by each process in the 1^{st} iteration is X. An IO operation manner in each of the remaining iterations is the same as that in the 1^{st} iteration, that is, a quantity of files written by each process in each iteration is X, but the iterations may have different written files. A total quantity of files written in K iterations of the application may be equal to N*X*K.

Assuming that a quantity of processes on each computing node is Q, an IO optimization strategy includes: Each computing node is used as an object, Q processes on one computing node are used as one aggregation group, one aggregation group corresponds to one file, a plurality of pieces of first to-be-written data generated by the Q processes in one aggregation group in a 1^{st} iteration to a K^{th} iteration are adjusted to one or more pieces of second to-be-written data, and the one or more pieces of second to-be-written data are written into a file corresponding to the aggregation group. Based on the IO optimization strategy, a total quantity N*X*K of written files in the original IO operation of the application can be reduced to P=N/Q. Refer to (b) in FIG. 11 for understanding. It is assumed that an IO mode indicated by an IO optimization strategy is an aggregation mode. (b) in FIG. 11 shows an example of performing a data read/write operation in an iteration procedure based on the IO optimization strategy. A 1^{st} iteration is still used as an example. In a possible implementation, an aggregation process in an aggregation group 1 adjusts all data blocks (a data block 1 to a data block X) generated by a process 1 to a process Q in the 1^{st} iteration to at least one second data block, and writes the at least one second data block into a file 1. An aggregation process in an aggregation group 2 adjusts all data blocks generated by a process Q+1 to a process 2Q in the 1^{st} iteration to at least one second data block, and writes the at least one second data block into a file 2. By analogy, an aggregation process in an aggregation group P adjusts all data blocks generated by a process N-Q to a process N in the 1^{st} iteration to at least one second data block, and writes the at least one second data block into a file P. An IO operation manner in each of the remaining iterations is the same as that in the 1^{st} iteration, that is, a quantity of files written by each process in each iteration is P, and same P files may be written in the iterations.

The foregoing IO optimization strategy may further specifically include a data aggregation manner. For example, a data aggregation manner for implementing (b) in FIG. 11 includes intra-process aggregation and inter-process aggregation. For example, with reference to FIG. 10, a 1^{st} iteration is used as an example. A process 1 first performs intra-process aggregation on a data block 1 to a data block X generated in the 1^{st} iteration to obtain one first data block. Remaining processes in the aggregation group 1 perform a same operation with reference to the process 1. Then, each process other than an aggregation process in the aggregation group 1 sends, to the aggregation process, a first data block obtained through the aggregation. The aggregation process performs inter-process aggregation on a plurality of received first data blocks to obtain at least one second data block, and the aggregation process writes the at least one second data block into a file 1.

With reference to FIG. 9, a functional module at a communication layer of the IO module may be configured to exchange data between IO modules of processes, to perform intra-process data aggregation and inter-process data aggregation. For example, an IO module in a process in an aggregation group may send a first data block and metadata (which may include metadata of each data block in the first data block) of the first data block to the aggregation process by using an MPI plug-in. If processes in the aggregation group are located on different computing nodes, cross-computing node data transmission may be performed by using a remote direct data access (remote direct memory access, RDMA) plug-in. A procedure manager in the aggregation process indicates, based on an IO optimization strategy, a serializer to reorganize a plurality of first data blocks into at least one second data block. The serializer is configured to record a sequence of aggregated or split data, and the like. For this part, refer to existing function descriptions of the MPI, the RDMA, and the serializer. Details are not described herein.

It should be noted that the IO optimization strategy may be generated by using an IO optimization algorithm, or may be configured by the user by using the configuration information. In this manner, because most HPC applications have features of basically the same IO normal forms in a same scale of a same computing instance, end-to-end closed-loop mapping of writing and reading without code modification can be implemented by loading simple configuration information.

Step 704: Write the M pieces of second to-be-written data into the storage cluster 20.

In an implementation, the M pieces of second to-be-written data are written in parallel into M files in the storage system 20.

Still refer to FIG. 9. The transport layer of the IO module includes a file system private interface outputter, a POSIX outputter, and the like. In step 704, when writing the second to-be-written data into the storage cluster 20, the IO module may invoke one of the interfaces to write the data into the storage cluster 20. In this case, a file format of the written data is a file format corresponding to an IO interface actually invoked by the IO module. For example, in step 701, the IO module intercepts invoking of the HDF5 interface by the application. In conventional technologies, in an IO operation of invoking the HDF5 interface, a file in an HDF5 format is generated, to store the invoked to-be-written data. In this application, when writing the to-be-written data to the storage cluster 20, the IO module may invoke a file system private interface outputter. In this case, a file in a private format corresponding to a file system private interface is generated. In other words, in an IO operation optimized based on the IO optimization strategy, a format of a file written by the application may be further changed.

According to the foregoing design, the IO optimization strategy may be planned based on a deployment feature of the storage cluster by bridging, through transparent bridging, an IO interface, for example, an IO interface commonly used by a large-scale high-performance application, without modifying program code of the application, so that performance of the application can be improved without modifying the program code. Because the program code does not need to be modified, no development cost is incurred. In addition, in this application, an attribute of an underlying storage cluster can be dynamically sensed, IO optimization is performed on a size of to-be-written data, a written file quantity, and a file format based on the attribute of the storage cluster, application logic is completely decoupled from an underlying IO behavior, and an adjusted IO behavior is controlled within an optimal performance range for a back-end storage cluster, so that an effective IO bandwidth of the back-end storage cluster is improved to fully use a bandwidth of the storage cluster, and actual IO performance of the application is greatly improved.

In addition to the functions described above, the IO module provided in this embodiment may be further configured to convert a file format. In this embodiment, the IO module may include a plurality of types of file format converters, such as a NetCDF format converter, an HDF5 format converter, and the like shown in FIG. 9. The NetCDF format converter may be configured to convert a file from a private format to a NetCDF format, or convert a file from another format like an HDF5 format to a NetCDF format. The HDF5 format converter may be configured to convert a file from a private format to an HDF5 format, or convert a file from another format like a NetCDF format to an HDF5 format.

When the IO module invokes the POSIX outputter to write the to-be-written data into the storage cluster 20, the data is stored in the storage cluster 20 as a POSIX file. A POSIX file extractor may be configured to extract a POSIX file in the storage cluster 20. Optionally, the IO module may convert the POSIX file into another format by using a format converter.

Table 1 shows examples of features of several conventional IO interfaces.

**Table 1**

| IO interface/Data format | Performance of a large-scale parallel computing instance | Compatibility |
|---|---|---|
| MPI-IO | Medium | Private format, incompatible with third-party post-processing |
| PNetCDF | Low | Common format, compatible with a large amount of third-party post-processing |
| NetCDF | Low | Common format, compatible with a large amount of third-party post-processing |
| Split NetCDF | High | Compatible with third-party post-processing provided that an additional aggregation operation is introduced |
| PHDF5 | Low | Common format, compatible with a large amount of third-party post-processing |
| GRIB | Low | Dedicated format, compatible with third-party post-processing tools in the industry |

It can be learned from Table 1 that, in the numerous data formats, a format having good compatibility with post-processing generally has poor running performance of a large-scale parallel computing instance. A data format having good performance generally has poor compatibility with third-party post-processing tools.

Based on the IO module provided in this embodiment of this application, by bridging, through transparent bridging, an IO interface having good compatibility but poor running performance of a large-scale parallel computing instance, performance equivalent to or even better than that of an IO interface with good performance but poor compatibility may be provided. For example, an application is bridged to an IO interface such as a PNetCDF, a NetCDF, or HDF5, and IO operations performed by the application on these IO interfaces are optimized by using the IO module, and the application or a third party is still supported in accessing, in the PNetCDF format, the NetCDF format, and the HDF5 format, data generated by the application. Performance of the original IO interface is improved while good compatibility of the interface is retained.

The functional modules included in the offline layer of the IO module described above may be deployed on the computing node, and may be in a process of the computing node or outside a process of the computing node. Alternatively, the IO module does not include the functional modules of the offline layer, and these functional modules are deployed on a storage node. This is not specifically limited.

Optionally, after the IO module writes the data into the storage cluster 20, the storage cluster 20 may further perform offline data reorganization, for example, reorganize one or more files in a private format into one file. A format of the file may be a private format or another format. In this way, when an application needs to read a plurality of files in a private format, a reorganized file may be directly returned, so as to improve read performance of the application.

This application provides an IO optimization manner for some specific applications, and the following provides descriptions with reference to Table 2. Table 2 shows examples of an IO mode commonly used by a typical application in the particle physics simulation field.

**Table 2**

| IO library/Data format | Large-scale performance | Additional metadata | Compatibility |
|---|---|---|---|
| POSIX | Medium | Small | Private format, incompatible with third-party post-processing |
| PHDF5 | Low | Small | Common format, compatible with a large amount of third-party post-processing |
| PNetCDF | Low | Small | Common format, compatible with a large amount of third-party post-processing |
| ADIOS2 | High | Large | High-performance dedicated format, a little adaptation to third-party post-processing tools |

For example, particle simulation is used as an example. In the particle physics simulation field, an application usually needs to frequently read and write a small data block, to store a simulation result of a particle, for example, status data such as a location and a speed of the particle. This type of application also has a high requirement on IO operation frequency, and often needs to frequently record a particle status in a simulation procedure. When the application uses conventional data formats such as PHDF5 and PNetCDF with good compatibility to read and write such data, severe performance bottlenecks may occur. If a private format with good performance is used, compatibility with third-party post-processing tools cannot be met. When a high-performance IO library like ADIOS2 is used to read and write such data, the application needs to frequently write a small data block, and a fixed-sized metadata block is generated in each writing. As a result, a proportion of metadata is large.

In view of this, embodiments of this application provide a manner in which the user may indicate, by using the configuration information, data that does not need order preserving, that is, out-of-order data. For example, the configuration information may indicate that a simulation result of the particle is data that does not need order preserving. Correspondingly, the IO module may aggregate, based on the configuration information, a plurality of small received data blocks including simulation results of particles into one piece of second to-be-written data. For the second to-be-written data, metadata of a plurality of small data blocks in the second to-be-written data may not be recorded, thereby reducing metadata overheads.

According to the foregoing design, the IO module provided in this embodiment can achieve, through performance optimization, a level of performance similar to the high-performance IO library like ADIOS2, and reduce a proportion of metadata to a level similar to that of a conventional IO library like PHDF5 and PNetCDF through data block aggregation, reorganization, and offline data reorganization in the storage cluster. In addition, consistent compatibility with third-party tools is provided by bridging, through transparent bridging, universal interfaces with excellent compatibility, such as PHDF5 and PNetCDF.

The foregoing describes the data processing method for the write operation. When a read operation is performed, a granularity (denoted as a second granularity) of read data may be determined. Data is read from the storage cluster 20 based on the second granularity. The second granularity may be determined by using the foregoing IO optimization strategy. Details are not described herein again.

It should be noted that, (1) the system shown in FIG. 1 is merely an example, and the system to which this embodiment is applicable may have more or fewer devices than those shown in FIG. 1. (2) The structure of the IO module shown in FIG. 9 is merely an example. In actual application, the IO module may have more or fewer functional modules or layer structures. In addition, the IO module may also have another name. For example, logically, the IO module is located between the application process and the storage cluster, and is configured to connect the application process and the storage cluster. Therefore, in some embodiments, the IO module may also be referred to as IO middleware. (3) A layer structure and a layer name included in the IO module shown in FIG. 9 and a name of a functional module included in each layer are merely examples, and may have different names in different records, which is not limited in this embodiment.

The method provided in embodiments of this application are described above with reference to the accompanying drawings. The following describes an apparatus provided in embodiments of this application with reference to the accompanying drawings.

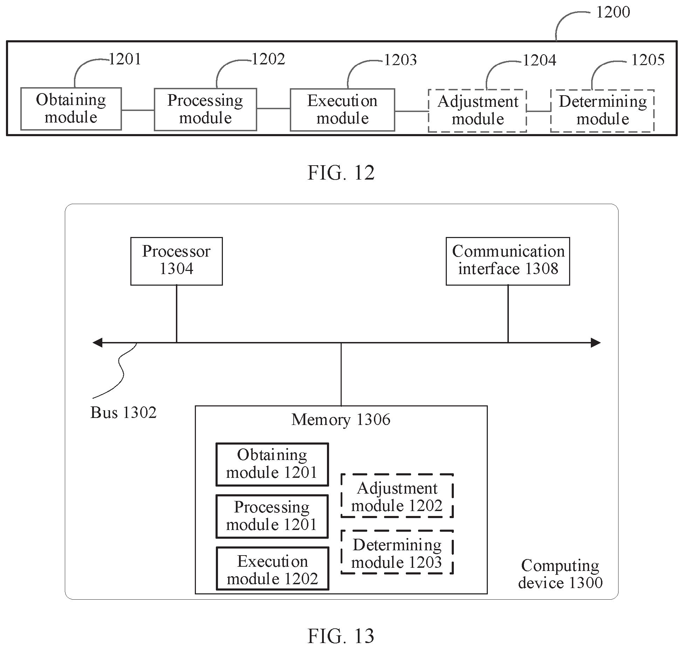

Based on a same inventive concept as the method embodiments, an embodiment of this application further provides a data processing apparatus. The apparatus is configured to perform the method in the method embodiment in FIG. 7. As shown in FIG. 12, the apparatus 1200 includes an obtaining module 1201, a processing module 1202, and an execution module 1203. Optionally, the apparatus 1200 may further include an adjustment module 1204 and a determining module 1205. Specifically, in the apparatus 1200, connections are established between the modules through communication paths.

The obtaining module 1201 is configured to obtain N pieces of first to-be-written data of a plurality of processes. For details, refer to the descriptions of step 701 in the method embodiment in FIG. 7. Details are not described herein again.

The processing module 1202 is configured to adjust the N pieces of first to-be-written data to M pieces of second to-be-written data based on a first granularity of accessing data of a storage cluster. A size of each piece of second to-be-written data is the first granularity, and the first granularity is determined based on an attribute of the storage cluster. For details, refer to the descriptions of step 703 in the method embodiment in FIG. 7. Details are not described herein again.

The execution module 1203 is configured to write the M pieces of second to-be-written data into the storage cluster. For details, refer to the descriptions of step 704 in the method embodiment in FIG. 7. Details are not described herein again.

In a possible implementation, when adjusting the N pieces of first to-be-written data to the M pieces of second to-be-written data based on the first granularity of accessing data of the storage cluster, the processing module 1202 is specifically configured to: split, at the first granularity, first to-be-written data that is in the N pieces of first to-be-written data and that is greater than the first granularity at the first granularity; and/or concatenate, at the first granularity, first to-be-written data that is in the N pieces of first to-be-written data and that is less than the first granularity.

In a possible implementation, the adjustment module 1204 is configured to: when M is greater than a preset value, adjust a value of the first granularity until M is less than or equal to the preset value.

In a possible implementation, the processing module 1202 is further configured to determine a plurality of pieces of first to-be-read data of the plurality of processes. The execution module 1203 is further configured to obtain at least one piece of second to-be-read data from the storage cluster based on a second granularity of accessing data of the storage cluster, where the at least one piece of second to-be-read data includes the plurality of pieces of first to-be-read data, a size of each piece of second to-be-read data is the second granularity, and the second granularity is determined based on the attribute of the storage cluster.

This application further provides a computing device 1300. As shown in FIG. 13, the computing device 1300 includes a bus 1302, a processor 1304, a memory 1306, and a communication interface 1308. The processor 1304, the memory 1306, and the communication interface 1308 communicate with each other through the bus 1302. The computing device 1300 may be a server, a storage array, a hard disk enclosure, or the like. It should be understood that quantities of processors and memories in the computing device 1300 are not limited in this application.

The bus 1302 may be a peripheral component interconnect (peripheral component interconnect, PCI) bus, an extended industry standard architecture (extended industry standard architecture, EISA) bus, or the like. The bus may include an address bus, a data bus, a control bus, and the like. For ease of representation, only one line is for representing the bus in FIG. 13, but this does not mean that there is only one bus or only one type of bus. The bus 1302 may include a channel for transferring information between various components (for example, the memory 1306, the processor 1304, and the communication interface 1308) of the computing device 1300.

The processor 1304 may include any one or more of processors such as a central processing unit (central processing unit, CPU), a graphics processing unit (graphics processing unit, GPU), a microprocessor (microprocessor, MP), or a digital signal processor (digital signal processor, DSP).

The memory 1306 may include a volatile memory (volatile memory), for example, a random access memory (random access memory, RAM). The processor 1304 may further include a non-volatile memory (non-volatile memory), for example, a read-only memory (read-only memory, ROM), a flash memory, a hard disk drive (hard disk drive, HDD), or a solid-state drive (solid-state drive, SSD). This is not specifically limited.

In an implementation, the computing device 1300 is configured to perform a function of a behavior of the data processing apparatus 1200. The memory 1306 stores executable program code. The processor 1304 executes the executable program code to separately implement functions of the obtaining module 1201, the processing module 1202, the execution module 1203, the adjustment module 1204, and the determining module 1205, so as to implement the data processing method. In other words, the memory 1306 stores instructions used by the computing device 1300 to perform the data processing method provided in this application.

The communication interface 1308 implements communication between the computing device 1300 and another device or a communication network by using a transceiver module, for example, but not limited to a network interface card or a transceiver.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform the data processing method.

An embodiment of this application further provides a computer program product including instructions. The computer program product may be software or a program product that includes instructions and that can run on a computing device or be stored in any usable medium. When the computer program product runs on at least one computing device, the at least one computing device is caused to perform the data processing method.

An embodiment of this application further provides a computer-readable storage medium. The computer-readable storage medium may be any usable medium that can be stored by a computing device, or a data storage device, such as a data center, including one or more usable media. The usable medium may be a magnetic medium (for example, a floppy disk, a hard disk, or a magnetic tape), an optical medium (for example, a DVD), a semiconductor medium (for example, a solid-state drive), or the like. The computer-readable storage medium includes instructions, and the instructions instruct the computing device to perform the foregoing data processing method.

Optionally, computer-executable instructions in this embodiment of this application may also be referred to as application program code. This is not specifically limited in this embodiment of this application.

It should be understood that the processor mentioned in this embodiment of this application may be implemented by hardware or by software. When the processor is implemented by using the hardware, the processor may be a logic circuit, an integrated circuit, or the like. When the processor is implemented by using the software, the processor may be a general-purpose processor, and is implemented by reading software code stored in the memory.

For example, the processor may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device, discrete gate or transistor logic device, discrete hardware component, or the like. The general-purpose processor may be a microprocessor, or the processor may be any conventional processor or the like.

It should be understood that the memory mentioned in embodiments of this application may be a volatile memory or a non-volatile memory, or may include both a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM) serving as an external cache. By way of example and not limitation, RAMs in many forms may be used, for example, a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDR SDRAM), an enhanced synchronous dynamic random access memory (Enhanced SDRAM, ESDRAM), a synchlink dynamic random access memory (Synchlink DRAM, SLDRAM), and a direct rambus random access memory (Direct Rambus RAM, DR RAM).

It should be noted that when the processor is a general-purpose processor, a DSP, an ASIC, an FPGA or another programmable logic device, a discrete gate, a transistor logic device, or a discrete hardware component, the memory (a storage module) may be integrated into the processor.

It should be noted that the memory described in this specification aims to include but is not limited to these memories and any memory of another proper type.

A person skilled in the art should understand that embodiments of this application may be provided as a method, a system, or a computer program product. Therefore, this application may use a form of hardware-only embodiments, software-only embodiments, or embodiments with a combination of software and hardware. Moreover, this application may use a form of a computer program product that is implemented on one or more computer-usable storage media (including but not limited to a magnetic disk storage, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

These computer program instructions may be stored in a computer-readable memory that can instruct the computer or any other programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

These computer program instructions may further be loaded onto a computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. In this way, this application is also intended to cover these modifications and variations of this application provided that such modifications and variations fall within the scope of claims of this application and equivalent technologies thereof.

## Claims

1. A data processing method, applied to a computing cluster, wherein the computing cluster comprises a plurality of computing nodes, the computing cluster is connected to a storage cluster, the storage cluster is configured to store data generated by the computing cluster, a plurality of processes of an application run on the plurality of computing nodes, each process executes a part of data of the application, and the method comprises:
obtaining N pieces of first to-be-written data of the plurality of processes;
adjusting the N pieces of first to-be-written data to M pieces of second to-be-written data based on a first granularity of accessing data of the storage cluster, wherein a size of each piece of second to-be-written data is the first granularity, and the first granularity is determined based on an attribute of the storage cluster; and
writing the M pieces of second to-be-written data into the storage cluster.

2. The method according to claim 1, wherein adjusting the N pieces of first to-be-written data to the M pieces of second to-be-written data based on the first granularity of accessing data of the storage cluster comprises:
splitting, at the first granularity, first to-be-written data that is in the N pieces of first to-be-written data and that is greater than the first granularity; and/or concatenating, at the first granularity, first to-be-written data that is in the N pieces of first to-be-written data and that is less than the first granularity.

3. The method according to claim 1 or 2, wherein the method further comprises:
when M is greater than a preset value, adjusting a value of the first granularity until M is less than or equal to the preset value.

4. The method according to any one of claims 1 to 3, wherein the method further comprises:
determining a plurality of pieces of first to-be-read data of the plurality of processes; and
obtaining at least one piece of second to-be-read data from the storage cluster based on a second granularity of accessing data of the storage cluster, wherein the at least one piece of second to-be-read data comprises the plurality of pieces of first to-be-read data, a size of each piece of second to-be-read data is the second granularity, and the second granularity is determined based on the attribute of the storage cluster.

5. A data processing apparatus, wherein the apparatus comprises:
an obtaining module, configured to obtain N pieces of first to-be-written data of the plurality of processes;
a processing module, configured to adjust the N pieces of first to-be-written data to M pieces of second to-be-written data based on a first granularity of accessing data of the storage cluster, wherein a size of each piece of second to-be-written data is the first granularity, and the first granularity is determined based on an attribute of the storage cluster; and
an execution module, configured to write the M pieces of second to-be-written data into the storage cluster.

6. The apparatus according to claim 5, wherein when adjusting the N pieces of first to-be-written data to the M pieces of second to-be-written data based on the first granularity of accessing data of the storage cluster, the processing module is specifically configured to: split, at the first granularity, first to-be-written data that is in the N pieces of first to-be-written data and that is greater than the first granularity; and/or concatenate, at the first granularity, first to-be-written data that is in the N pieces of first to-be-written data and that is less than the first granularity.

7. The apparatus according to claim 5 or 6, wherein the apparatus further comprises an adjustment module, and the adjustment module is configured to: when M is greater than a preset value, adjust a value of the first granularity until M is less than or equal to the preset value.

8. The apparatus according to any one of claims 5 to 7, wherein the processing module is further configured to determine a plurality of pieces of first to-be-read data of the plurality of processes; and the execution module is further configured to obtain at least one piece of second to-be-read data from the storage cluster based on a second granularity of accessing data of the storage cluster, wherein the at least one piece of second to-be-read data comprises the plurality of pieces of first to-be-read data, a size of each piece of second to-be-read data is the second granularity, and the second granularity is determined based on the attribute of the storage cluster.

9. A computing device, comprising a processor and a memory, wherein the memory stores instructions, and when the processor executes the instructions, the device is caused to perform the method according to any one of claims 1 to 4.

10. A computer-readable storage medium, wherein the storage medium stores a computer program or instructions, and when the computer program or the instructions are executed by a communication apparatus, the method according to any one of claims 1 to 4 is implemented.
